# EUROPEAN PATENT SPECIFICATION

(11) **EP 3 245 883 B1**
(45) Date of publication and mention of the grant of the patent: **26.01.2022**
(21) Application number: 16170118.0
(22) Date of filing: 18.05.2016
(51) Int. Cl.: A23L 17/30

(54) **DEVICE FOR ARTIFICIAL GRANULAR CAVIAR PRODUCTION**
VORRICHTUNG ZUR HERSTELLUNG VON KÜNSTLICHEM KÖRNIGEM KAVIAR
DISPOSITIF DE PRODUCTION DE CAVIAR GRANULAIRE ARTIFICIEL

(43) Date of publication of application: 22.11.2017
(73) Proprietor: Harutyunyan, Hasmik, 1060 Wien (AT)
(72) Inventor: Harutyunyan, Hasmik, 1060 Wien (AT); Khachatryan, Tigran, 1060 Wien (AT)
(74) Representative: Patentanwaltskanzlei Matschnig & Forsthuber OG

(56) References cited:
- EP-A1- 2 145 549
- WO-A2-01/21010
- DATABASE WPI Week 200481 Thomson Scientific, London, GB; AN 2004-819629 XP002759439, & RU 2 238 665 C2 (DAREOS CO LTD) 27 October 2004 (2004-10-27)
- DATABASE WPI Week 199410 Thomson Scientific, London, GB; AN 1994-080689 XP002759440, & RU 2 002 432 C1 (KOLESNIKOVA G L) 15 November 1993 (1993-11-15)
- DATABASE WPI Week 200040 Thomson Scientific, London, GB; AN 2000-462999 XP002759441, & RU 2 139 668 C1 (GEVORGYAN P G) 20 October 1999 (1999-10-20)

## Description

### Field of the invention

The invention relates to the food industry and to devices for preparation of a granular food product, similar to black caviar, from natural food products, in particular for the production of an artificial analogue of caviar from valuable species of fish.

### Background of the invention

Such methods and apparatus for production of granulated caviar are known in the state of the art. For example, SU 1782523 A1 (*Auth. Cert. USSR No. 1782523, A23L, 1*/*328, publication* 23.12.92) discloses an apparatus based on technology of granules formation from an initial mixture. The mixture consists of chicken eggs, fish homogenate, food dye and salt. The granules are formed by pressing the mixture and then supplying under pressure the dosated product stream into vegetable oil at a temperature of 86 - 90°C. Afterwards the granules are separated from the oil, washed, and packaged after addition of flavoring emulsion. Black dye, which is produced from tea extract and ferric chloride (FeCl₃) at pH 1.8 - 2.2, is used as a coloring.

A disadvantage of this method is that the granules are very small and are attached to one another, and therefore do not retain their spherical shape and require further calibration. Besides, the product has poor dietary and nutritional properties, because some people have allergic reactions to chicken eggs. On the other hand, the presence of chemicals, in particular iron chloride (FeCl₃), in the composition of the dye also reduces the quality of the product, e.g. its dietetic and organoleptic properties.

RU 2002432 C1 (*Patent of Russian Federation No. 2002432, A23L, 1*/*328, publication 15.11* .93) discloses a method that uses pharmaceutical coal adsorbent as a dye. However, in order to produce the desired color a large dose of the adsorbent is required. In this case, the resulting product cannot be used regularly as a food, as long as a high dose of the pharmaceutical coal adsorbent is used, since this is not recommend by medicine.

Another method - disclosed in RU 2139668 C1 - for obtaining of food granulated caviar is known in the state of the art, according to which an initial mixture is prepared. It contains a protein colloidal solution, jelly food and water. Granules are forming by pressing the mixture and then supplying under pressure the dosated product stream into vegetable oil at temperature of 86 - 90°C. The granules are then separated from the oil, washed by water, subjected to tanning in the tea extract at least for 30 minutes and washed with water again, then treated with dye, washed again with water, then with salt solution, treated with flavoring additives in amount not exceeding of 10% by weight of the product and granules are mixed with vegetable oil. The finished product is packed. As protein colloidal solution soy milk and the first milk (dal) are used in a ratio 20:1 to 1:20, and the ratio of protein colloidal solution : edible gelatin : water in the initial mixture is (7 -10) : 1 : (3 - 5 ). Walnut crust is used as the dye extract. The obtained granules are treated by dipping them into an extract for no more than for 3 minutes. The disadvantage of this method is that the product causes allergic reactions in people who suffer from intolerance to milk products, due to the lack of the enzyme lactate dehydrogenase. Additionally, jelly food, which is prepared from animal bones, is difficult to digest, and reduces dietary and organoleptic properties of the product.

Another method (AM 1813 A2) is suited for producing imitated granulated caviar. For that a mixture comprising soybean milk, gelling agent of vegetable origin and water is prepared. This mixture is introduced, under pressure, through apertures in the calibration into vessel with the vegetable oil heated to 45°C. The obtained granules are separated from the oil and washed with water, subjected to tanning for 30 minutes in the tea extract and washed with water, treated with dye prepared from walnut, washed with water and salt solution. After each washing the remaining moisture on the granules surface is removed by leaving the granules for 15 - 20 minutes on the sieve. Then product is seasoned with spices, packed, and its top layer is oiled and packaged. WO 01/21010 A2 discloses a method and a device for the preparation of alimentary soft granular caviar. RU 22 38 665 C2 discloses a method for the production of caviar butter. EP 2 145 549 A1 discloses a method for the preparation of soft granular caviar.

Moreover, the methods and devices known in the state of the art have following the disadvantages:
- low efficiency when used on an industrial scale,
- production of a significant quantity of granules with deviation from the standard size - nonstandard granules, which reduces the output of finished products. These nonstandard granules are formed due to the fact that when the droplets, prepared from an initial foodstuff solution, get into the upper layer of hot forming fluid, they collide with each other and form granules of uncontrolled shapes and sizes. Furthermore, since non-sterile air can get into the container with initial foodstuff solution, the probability of product contamination with either pathogenic or opportunistic pathogenic bacteria can increase, which in fact can result in reduction of the quality and the shelf life of the final product. During the manufacturing process the initial foodstuff solution in the dispensing container may start dissociating into its original foodstuff components, which significantly affects the homogeneity of the granule composition and results in significant reduction in product quality and in increase of the consumption of the original foodstuff components.

Objects of the invention are:
- increase the efficiency of granule formation process and prevent losses of foodstuff,
- increase production capacity on an industrial scale (up to 700-800 kg per shift) and to simplify the structure of the apparatus,
- reduce the risk of product contamination with either pathogenic or opportunistic pathogenic bacteria during the production process,
- significantly increase the product quality.

These objects are achieved by raising the upper limit temperature for preparation of solution of product components up to 98°C, using sterile gas, e.g. carbon dioxide, at the same time and increasing homogeneity of the granules.

According to the present invention this is achieved by an apparatus for production of granules, in particular artificial granulated caviar, from an initial aqueous composition of foodstuff components comprising at least one food cooker, at least one first container and at least one second container placed one above the other, a storage hopper, and an electromechanical calibration device, wherein the food cooker is configured to prepare and to heat up an initial foodstuff-solution from an initial aqueous composition of foodstuff and comprises a water jacket, a heating unit, and a built-in electric fast-speed mixer homogenizer, which built-in electric fast-speed mixer homogenizer is configured to homogenize the initial foodstuff-solution, in order to achieve a homogenized foodstuff-solution, the first container is configured to receive the homogenized foodstuff-solution and to maintain the homogenized foodstuff-solution's homogeneity and is designed as a sealed dispensing container, for instance gas-proof, preferably rectangular, dispensing container, which is arranged above the second container, is connected to a source of compressed sterile gas via a gas pressure reductor, comprises a temperature-control jacket, outlet pipes, and discharge tubes having granulation devices, the second container contains a forming fluid and is configured to form and to accumulate the granules and has an inclined bottom, which is configured to forward the granules to the storage hopper, hot water jacket and cooling fluid jacket, in particular cold water, which are configured to achieve and control/maintain a temperature gradient between the top and the bottom of the second container, fluid-outlet pipes, which are configured to allow drain and circulation of the forming fluid, the storage hopper has an inclined bottom, the electromechanical calibration device has at least one sieve, the said sieve is arranged for final cleaning and calibration of the granules.

The presence of the built-in electric fast-speed mixer homogenizer makes it possible to prepare initial foodstuff solution at high temperature (98°C). As explained below in more detail, this initial foodstuff solution may comprise for example pectin, protein, in particular vegetable protein, agar - agar, food color.

It is worthwhile to note that the discharge tubes having granulation devices are configured to form droplets from the homogenized foodstuff-solution prepared in the sealed dispensing container. The droplets then fall into the heated forming fluid, where granules are formed. I.e. the granulation of the droplets is achieved by means of the heated forming fluid.

Due to the fact that the forming fluid gets displaced out of the second container by the granules, it is needed to allow drain and circulation of the forming fluid, which is achieved by means of the fluid-outlet pipes.

It may be advantageous, if the second container has two fluid-outlet pipes, which are arranged at different levels of the second container, wherein one fluid-outlet pipe is configured to allow the drain of the forming fluid and the other fluid-outlet pipe is configured to allow the supply of chilled forming fluid and/or the drain of the forming fluid. It this way the temperature gradient from the top to the bottom of the second container can be maintained.

Moreover it may be practical if the second container has two gas-outlet pipes.

It is also practical if the at least one sieve is made of a metallic material.

Moreover it may be useful if the heating unit is designed as a gas burner and the at least one food cooker is designed as gas-fired food cooker comprising a gas storage container for storing natural gas. The usage of natural gas greatly speeds up the process of preparing the homogenized foodstuff-solution at a high temperature, while using a fast- speed mixer homogenizer (3000 rounds/min) allows to get a homogenized foodstuff-solution with an improved degree of the homogeneity.

Moreover, it may be advantageous if the discharge tubes having granulation devices, in particular granulation devices comprising needles, are heatable and comprise valve cocks. The heatable discharge tubes can be realised for example by designing the discharge tubes such that they reach through the temperature-control jacket, which temperature-control jacket can be supplied with hot water. In this way the granulation process can be significantly simplified. For instance this ensures heating of the homogenized foodstuff-solution right before the droplets are formed and therefore a uniform process for getting the granules. The presence of the valve cocks allows to smoothly adjust the size and number of the droplets, which leads to production of granules of essentially the same size.

Furthermore, it may be practical, if the apparatus comprises at least one, in particular two, outlet pipe arranged under the granulation devices and above the second container and designed to direct the droplets from the middle to the sides of the second container. Note that in order to avoid the contamination of the droplets with bacteria it is useful to supply the at least one outlet pipe with a sterile gas.

It may be useful if the sealed dispensing container comprises a circulating centrifugal pump, which is configured to prevent stratification of the initial foodstuff-solution.

It may be advantageous if the source of compressed sterile gas contains carbon dioxide.

It may be practical if the second container has a tap, which tap is associated to the inclined bottom and is configured to forward the granules to the storage hopper.

Furthermore, it may be practical if the storage hopper comprises at least one mesh bag, which at least one mesh bag is configured to separate the finished granules from the forming fluid.

Furthermore, it may be useful, if the storage hopper is detachable and/or removable from the apparatus according to the present invention and in particular comprises wheels.

Moreover, it may be opportune if the at least one mesh bag is replaceable during the production process.

It might be useful, if the forming fluid is a vegetable oil, in particular sunflower or corn oil.

Examples of a preferred embodiment of the present invention are described below in relation to the figure. The embodiment discussed below is given only fore illustrative purpose and is not delimiting for the invention. The terms "in particular", "for instance", "preferably" or the like are used throughout the present application in order to point out specific but not essential features of the present invention and should not delimit the scope of the present invention.

### Brief description of the drawings

Fig. 1 is a side schematic view of a system for producing artificial granular caviar,
Fig. 2 shows schematically forming and directing droplets between a gas-proof sealed dispensing container and a second container,
Fig. 3 shows a second container with hot water jacket and cooling fluid jackets.

### Detailed description of the preferred embodiment

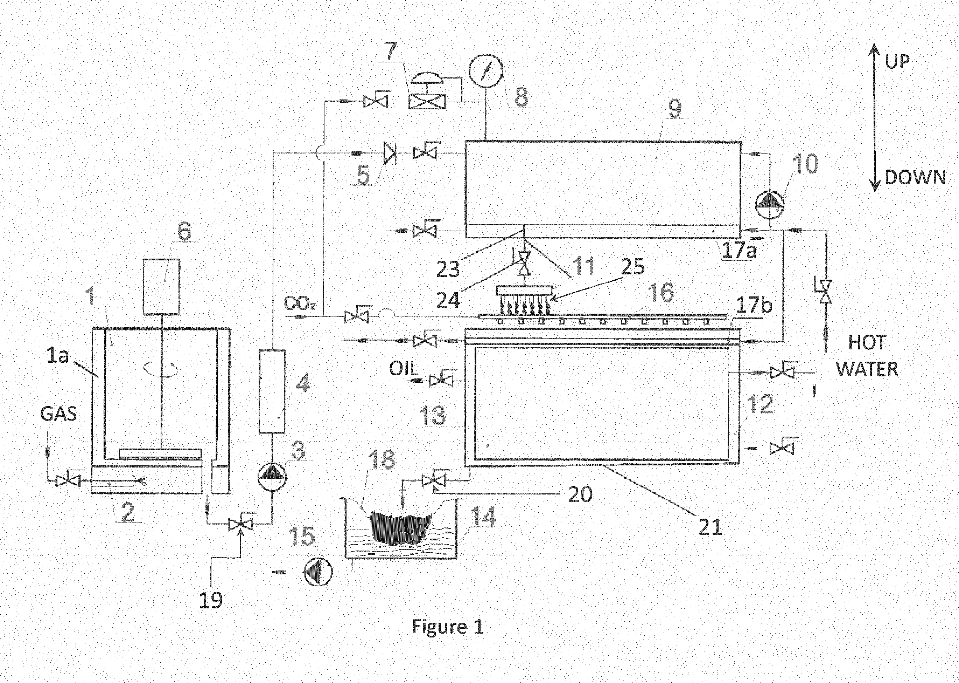

Figure 1 shows a system for production of granules, in particular artificial granulated caviar, from an initial aqueous composition of foodstuff components, which system corresponds to the apparatus according to the present invention. The system is shown from a side.

This system comprises a gas-fired food cooker 1 with a water jacket 1a and built-in electric fast-speed mixer homogenizer 6 and a gas burner 2. In the gas-fired food cooker 1 an initial foodstuff-solution can be prepared from original foodstuff components, heated up by means of the gas burner and homogenized by means of the built-in electric fast speed mixer homogenizer 6, in order to prepare a homogenized foodstuff solution.

Moreover the system comprises three centrifugal pumps 3, 10, 15. The functioning and the purpose of each pump is explained below in more detail.

Furthermore, the system can comprise a fine mesh filter 4 for the initial aqueous composition.

Moreover, the system comprises a gas-proof sealed dispensing container 9, which is configured to receive the homogenized foodstuff-solution and is connected to the source of compressed sterile gas, in particular CO₂, via gas pressure reductor - regulator 7, which is configured to adjust and control the pressure in the gas-proof sealed dispensing container 9. Using sterile gas has as advantage that it reduces probability of product contamination with either pathogenic or opportunistic pathogenic bacteria. The gas pressure reductor - regulator 7 can for example comprise a manometer 8, which manometer 8 is configured to measure the pressure within the gas-proof sealed dispensing container 9. Moreover, the gas-proof sealed dispensing container 9 has a water jacket 17a, which water jacket 17a corresponds to the temperature-control jacket according to the present invention. The water jacket 17a can be arranged for example at the bottom of the gas-proof sealed dispensing container 9 and is configured to control temperature in the gas-proof sealed dispensing container 9. Furthermore, the gas-proof sealed dispensing container 9 is equipped with a plurality of discharge tubes 23, for instance with 25 (twenty five) discharge tubes. Each discharge tube 23 can be equipped, as it is the case in this example, with a granulation device 11. The discharge tubes 23 having granulation devices 11 according to the present invention are configured to form droplets of the homogenized foodstuff solution of a particular size. The size of the droplets is discussed below in more detail. In order to ensure that the gas-proof sealed dispensing container 9 stays gas-proof sealed during the production process, there may be a back-flow valve 5 associated to the gas-proof sealed dispensing container 9. The pressure in the gas-proof sealed dispensing container 9 during the production process is usually kept at about 0.8 - 1.2 bar. The back-flow valve can be designed to prevent decompression of the gas-proof sealed dispensing container 9.

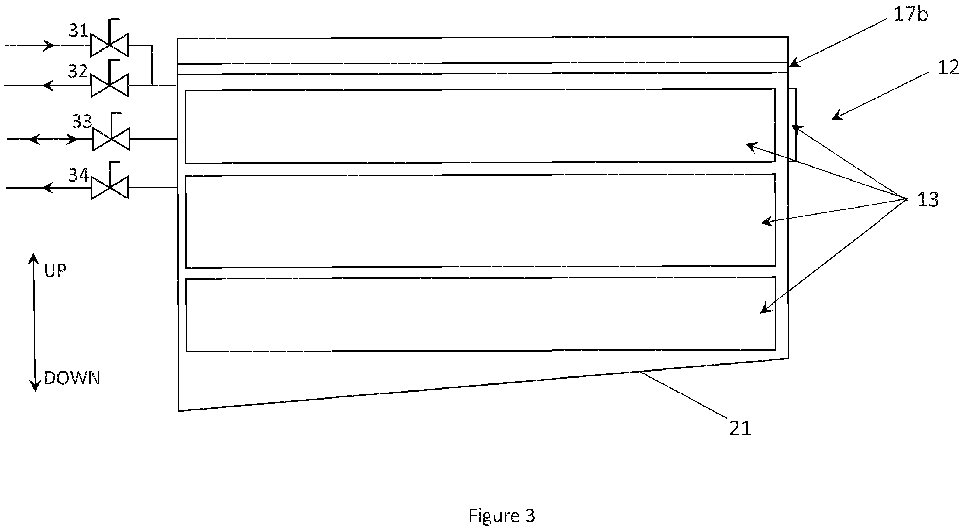

Furthermore the system comprises a forming-fluid-tank 12, which corresponds to the second container according to the present invention, which contains a forming fluid 22, in particular vegetable oil, for example sunflower and/or corn oil. The forming-fluid-tank 12 may have for instance a rectangular form. The forming fluid 22 is configured to form the granules from the droplets, which droplets come out of the discharge tubes 23 having granulation devices 11 and fall down in to the forming fluid 22. It is to be understood that the rectangular shape of the forming-fluid-tank 12 is not mandatory. One can also use forming-fluid-tanks of different shapes. However, it will be useful to choose the shape/geometry of the tank in such a way that the temperature gradient along the forming-fluid-tank's height can be achieved. In particular, it is advantageous if the temperature of the forming fluid 22 at the bottom of the forming-fluid-tank 12 is lower than at the top of the forming-fluid-tank 12. It should be understood by the person skilled in the art that the terms "top" and "bottom" within the scope of the present invention are inevitably connected to the directions up and down, which are shown with arrows UP and DOWN in Fig. 1. For example the droplets from the granulation devices 11 fall down in direction of the forming-fluid-tank 12. The forming-fluid-tank 12 has an inclined bottom 21, wherein the inclined bottom 21 is configured to form and store granules. Moreover, the forming-fluid-tank 12 can comprise a tap, which is associated to the inclined bottom 21 and is configured to discharge the granules into the storage hopper 14. Furthermore heating 17b and cooling jackets 13 are arranged the forming-fluid-tank 12 and are configured to control temperature and in particular to produce and to maintain the temperature gradient in the forming-fluid-tank 12. As one can deduce from Fig. 3 the numbers of jackets can vary, depending on the example of the embodiment. For instance the forming-fluid-tank 12 in Fig. 3 has 4 cooling fluid jackets 13 and one hot water jacket 17b.

Moreover, the system comprises a storage hopper 14 having metal sieves and/or mesh bags 18. The metal sieves and/or mesh bags 18 are configured to separate the finished granules from oil. The storage hopper 14 can be designed such that it is detachable from the system. In this way it can be connected to the system as a separate adjustable device. It can be also practical if the storage hopper 14 has wheels and a centrifugal pump 15. The centrifugal pump 15 is configured to pump out the forming fluid 22 and to at least partially separate the forming fluid 22 from the granules. This centrifugal pump 15 can, for example, be attached to the storage hopper 14.

Furthermore the system comprises an electromechanical sieve (not shown), which is configured to clean and calibrate finished granules. The calibration can be performed for example by sorting out the granules of unwanted size.

Furthermore, a method for producing granules, in particular artificial granulated caviar, from an initial aqueous composition of foodstuff components, is disclosed. This method does not form part of the present invention and is e.g., performed by means of the above described apparatus and comprise the following steps:
Step I: preparing the initial aqueous composition of foodstuff components - initial foodstuff solution - comprising vegetable protein, in particular soy protein, dye, in particular greed dye or black dye, pectin, in particular apple pectin, food gelling agent, in particular agar, and water;
Step II: heating and homogenizing the initial foodstuff solution, in order to achieve a hot homogenized foodstuff solution;
Step III: cooling and pressurizing the hot homogenized foodstuff solution, in order to achieve a homogeneous foodstuff solution;
Step IV: feeding the homogeneous foodstuff solution through a granulation device, in order to achieve droplets;
Step V: immersing the droplets into forming fluid for granulation, in order to achieve granules. The forming fluid comprise layers of different temperature. The upper layers of the forming fluid are hotter than the lower levels, so there is a temperature gradient. The droplets fall in to the upper hotter layer of the forming fluid the granules and sink into colder layers of the forming fluid. During this process the granules are formed;
Step VI: separating the granules from the forming fluid;
Step VII: washing granules with cold water, in order to remove the rest of the forming fluid;
Step VIII: treating the granules with tannin, for instance in an about 1% solution of tannin;
Step IX: washing the granules with water;
Step X: treating the granules in a container with a salt solution, preferably with an about 12 -14% cooking salt solution for about 25 - 50 minutes;
Step XI: removing the granules from the salt solution;
Step XII: drying and sorting the granules on a sieve, preferably an electromechanical sieve, in order to obtain dry granules, and
Step XIII: adding a flavoring agent to the dry granules, in particular in an amount of about 10% by weight, and mixing well.

In the following an example of preparing granules with a method is discussed. This method may use system, which system corresponds to the system according to the present invention. However, said method does not form part of the present invention.

### Step 1: Preparation of initial aqueous composition of foodstuff components (for instance at an amount of 150 litres).

1.1 In a first separate container (not shown) about 1.5 kg of pectin is diluted in about 30 liters of water and, after about 2 hours, mixed by a mixer (not shown) in order to achieve a water-pectin solution,
1.2 In a second separate container (not shown) about 3.9 kg of protein is diluted in about 20 liters of water by using a mixer (not shown), in order to achieve a water-protein solution,
1.3 In a third separate container (not shown) about 7 kg of green or black food color is diluted in about 30 liters of water by using a mixer (not shown), in order to achieve a foodcolor-solution.

Note that the steps 1.1 to 1.3 are performed outside of the gas-fired food cooker 1. It is understood that there is no need to use three different containers. Also the order of the steps 1.1 to 1.3 is not essential.

### Step 2: Preparation the homogenized foodstuff solution.

2.1 About 62.5 liters of water are supplied into the gas-fired food cooker 1, mixed up with the built-in electric fast speed mixer homogenizer 6 and about 3.75 kg of agar-agar are gradually added. While continuously mixing by means of the built-in electric fast speed mixer homogenizer 6 the temperature is raised to about 90°C-95°C by means of the gas burner 2, 2.2 The water-pectin solution from Step 1.1 is added to the gas-fired food cooker 1 with the heated water-agar solution. While continuously mixing the temperature in the gas-fired food cooker is raised to about 95°C by means of the gas burner 2,
2.3 The water-protein solution from Step 1.2 and foodcolor-solution 1.3 are gradually added to the gas-fired food cooker 1. While continuously mixing by means of the built-in electric fast speed mixer homogenizer 6, the temperature is raised to about 98°C by means of the gas burner 2.

In this way a hot homogenized foodstuff solution is prepared.

### Step 3: Setting up the gas-proof sealed dispensing container 9 and in the second container (forming-fluid-tank) 12.

3.1 Supply hot water into the temperature-control jacket 17a of the gas-proof sealed dispensing container 9 and to the hot water jackets 17b of the forming-fluid-tank 12.
3.2 Supply cooling fluid, in particular cold water, into the cooling fluid jacket 13 of the forming-fluid-tank 12. The temperature of the cooling fluid is about 1-2°C.
3.3 Supply the forming fluid (vegetable oil, preferably corn or sunflower oil) to the forming-fluid-tank 12. The forming can be supplied for instance through a valve 31 associated to the forming-fluid-tank 12.

### Step 4: Transferring the heated up homogenized foodstuff solution from the gas-fired cooker 1 into the sealed container 9.

This step mays be performed, for example, by opening a tap 19 and feeding the hot homogenized foodstuff solution from Step 2 into the gas-proof sealed dispensing container 9, in particular through a fine mesh filter 4, for example by means of a first centrifugal pump 3.

### Step 5: Circulation of the homogenized foodstuff solution.

This step can be performed for example using a second centrifugal pump 10, which is put in gear and circulation of the homogenized foodstuff solution in the gas-proof sealed dispensing container 9 starts. For example the homogenized foodstuff solution can be fed from a lower level (bottom) into an upper cavity of the gas-proof sealed dispensing container 9 for example through through a pipeline, which, for example, is located outside. One of the advantages of the circulation of the homogenized foodstuff solution in the gas-proof sealed dispensing container 9 is keeping the degree of the homogeneity of the homogenized foodstuff solution at a substantially constant level. Note that the homogenized foodstuff solution stays outside the granulation devices 11 during the circulation.

### Step 6: Setting the pressure in the gas-proof sealed dispensing container 9.

After reaching the set temperature modes, sterile gas is fed into the gas-proof sealed dispensing container 9 with the homogenized foodstuff solution. A constant pressure is set within the range of about 0.8 - 1.2 bar, preferably 0.9 - 1.0 bar, by means of a gas pressure reductor- regulator 7. The gas pressure in the gas-proof sealed dispensing container 9 can be visually monitored for example by means of a manometer 8. The temperature in the temperature-control jacket 17a is held at about 80-85°C.

### Step 7: Forming and directing droplets of the homogenized foodstuff solution.

In order to form the droplets, each granulation device 11 can be provided with valve cocks 24 and with needles 25, in particular with twenty five needles 25, which needles 25 are designed to calibrate the size of the droplets, i.e. to achieve droplets of a particular size. In particular, the needles can have needle orifices with a diameter of about 0.4-0.6 mm.

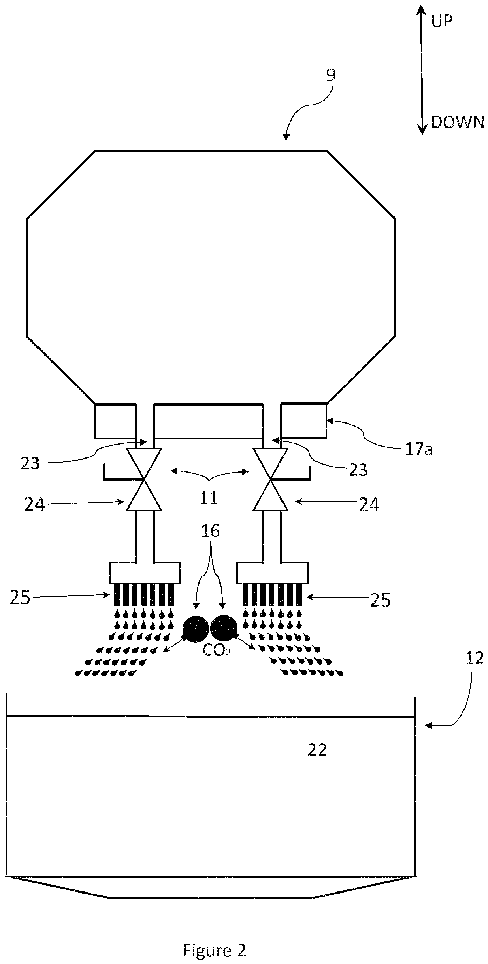

In order to direct the droplets, two outlet pipes 16 are arranged underneath the granulation devices 11 and above the surface of the forming fluid 22 in the forming-fluid-tank 12 (see Fig. 2). It is advantageous to arrange the outlet pipes 16 such that the droplets are directed from the middle to the outside walls of the forming-fluid-tank 12 by the gas coming out of the outlet pipes 16. The outlet pipes 16 may have calibrated orifices of a particular size and are designed to induce directed flows of gas (sterile gas, in particular CO₂) under each of the, for example 25, granulation devices 11. The gas flows can be directed at any pre-set angle, in particular at 15 - 30° with regard to the surface of the forming fluid 22, and are configured to direct the droplets from the middle to the outer cooled walls of the forming-fluid-tank 12 at these pre-set angles. The outlet pipes 16 can also have supply cocks in order to control the amount of the gas coming out of the outlet pipes. The size and number of the droplets can be regulated by means of the valve cocks.

### Step 8: Forming of granules.

The droplets immerse in a 30 - 70 mm thick layer, in particular 40-50 mm thick layer, of heated vegetable oil. In this layer of vegetable oil regular ball- shaped granules are formed, for instance with a diameter of about 2.0-3.0 mm.

The gas flow from the outlet pipes 16 directs the granules from the center of the forming-fluid-tank 12 to its walls, where the granules begin to sink into the lower cold layers of the vegetable oil before reaching the cooled (for example by means of a cooling jacket 13) walls of the second container. Due to the geometry of the forming-fluid-tank 12 it is possible to achieve a temperature gradient along the height of the, for instance about 900 mm high, second container. This temperature gradient can for example comprise a temperature of about 40-45°C at the top and about 4-6°C at the bottom of the forming-fluid-tank 12. During the production process the hot granules immersing in the cooler layers of the forming fluid 22, in particular vegetable oil, give off the heat and make the vegetable gradually warmer. The cooling fluid jackets 13 arranged on the walls outside of the forming-fluid-tank 12 allow to cool down the forming fluid 22 (the vegetable oil). The cooling fluid, in particular cold water, for the cooling fluid jackets 13 can be cooled in a refrigeration system (not shown) and achieve temperatures of about 1-2°C.

As it is shown in Fig. 3, chilled forming fluid can be fed through a lower fluid-outlet pipe 33. The temperature of the chilled oil is about 15 - 20°C and it may be pumped in by means of a centrifugal pump (not shown). During the process the forming fluid 22 heats up and gets displaced by the granules. In order to drain the excess hot forming fluid during the process an upper fluid-outlet pipe 32 is provided. This also helps to maintain the temperature gradient at all levels of forming fluid 22. As described above the valve 31 is provided to supply the forming fluid at the very beginning of the production process. It is understood that while the valve 31 is open the fluid-outlet pipes 32, 33 and the lowest valve 34 are closed. After the forming fluid is supplied the valve 31 closes. During the granulation process, i.e. when the granules are formed, only the outlet-fluid pipes 32, 34 are used, in order to allow the forming fluid 22 to circulate. The lowest valve is provided in order to drain the forming fluid 22 after the granulation process and before forwarding the granules into the storage hopper 14.

The width of the forming-fluid-tank 12 (for instance about 800 mm) is chosen such that the hot granules that get gradually cooled in a free-fall sink to the bottom of the forming-fluid-tank 12 do not actually reach side walls of the second container. Due to selected temperatures (set temperature gradient) it is possible to get very high quality granules in the layers of the forming fluid 22. The granules are accumulated at an inclined bottom 21 of the forming-fluid-tank 12. The inclination of the inclined bottom 21 may be chosen between 10° and 20° and is preferably about 14° with regard to horizontal line.

### Step 9: Separating the granules from the forming fluid 22.

After Step 8, the granules are discharged, for example through a discharging valve 20 to the storage hopper 14 with mesh bags 18, where secreted vegetable oil is pumped out through the third centrifugal pump 15 to a system for cleaning and recovery of the vegetable oil (not shown). Ready granules of caviar are unloaded from the the mesh bags 18 into calibration sieves, in particular metal electromechanical sieves, for calibration.

### Step 10: postprocessing of the granules.

The postprocessing of the granules can for example comprise
10.1 washing granules with cold water, in order to remove the rest of the forming fluid;
10.2 treating the granules with tannin, in particular in an about 1% solution of tannin;
10.3 washing the granules with water;
10.4 treating the granules in a container with a salt solution, in particular with an about 12 -
14% cooking salt solution for about 25 - 50 minutes;
10.5 removing the granules from the salt solution;
10.6 drying and sorting the granules on a sieve, in particular an electromechanical sieve, in order to obtain dry granules, and
10.7 adding a flavoring agent to the dry granules, in particular in an amount of about 10% by weight, and mixing well.

Note that the steps 10.1 to 10.7 are not mandatory, one may drop one or more of these steps or introduce other postprocessing steps.

The postprocessed granules of caviar are sent for further processing in order to get gustatory quality. Afterwards the granules of caviar are packaged in glass jars with lids, labeled, passes vacuum processing and packed in cardboard boxes.

In what follows preferred non-restrictive embodiments of the method for producing granules, in particular artificial granulated caviar, from an initial aqueous composition of foodstuff components are described.

In Step A the initial aqueous composition of foodstuff components - initial foodstuff solution
- comprising vegetable protein, in particular soy protein, dye, in particular greed dye or black dye, food gelling agent, in particular pectin and agar, even more particular apple pectin and agar, and water is prepared.

**Table 1 shows examples of the initial foodstuff composition:**

| No. of example | Components of initial mixture | Quantity, in weight % |
|---|---|---|
| 1 | Soy protein | 6,7 |
| | Green dye | 4,9 |
| | Apple pectin | 1,0 |
| | Agar agar | 2,5 |
| | Water | 84,9 |
| 2 | Soy protein | 6,5 |
| | Green dye | 5,2 |
| | Apple pectin | 1,0 |
| | Agar agar | 2,5 |
| | Water | 84,8 |
| 3 | Soy protein | 6,9 |
| | Green dye | 5,0 |
| | Apple pectin | 1,0 |
| | Agar agar | 2,5 |
| | Water | 84,6 |

In Step B the initial foodstuff solution is heated up gradually to approximately 98°C and homogenized, in order to achieve a hot homogenized foodstuff solution. After maintaining the hot homogenized foodstuff solution at this temperature for about 3 to 5 minutes it is fed into a first container, which can be designed as a gas-proof sealed dispensing container 9.

Steps A and B can be performed for example as follows: To begin with three mixtures are prepared beforehand. A first mixture of soy protein and dye can be prepared by mixing with water and left for 2 - 3 hours. A second mixture of pectin with water, for example in a ratio of 1:10, can be prepared and left undisturbed, for instance for at least 2 hours. A third mixture of agar-agar with water can be prepared, for example in a ratio of 1 to 18, and be left to rest, for instance for at least 2 hours. The first mixture (soy protein, dye and water) can be then added to a kettle, such as a gas-fired cooker in Fig. 1, and while continuously stirring heated up to boiling temperature of about 96 - 98°C. Then while continuously stirring and keeping the temperature at about 96 - 98°C the second mixture (pectin and water) is added to the first mixture. Then while continuously stirring and keeping the temperature at about 96 - 98°C the third mixture (agar-agar and water) is added to the first and the second mixture and boiled for about 3 to 5 minutes.

In Step C the hot homogenized foodstuff solution is cooled to about 40 - 60°C, in particular to 50 - 60°C, filtered (for instance by feeding through a mesh filter 4) and pressurized to about 0.4 - 0.8 kg/cm² (for instance in a gas-proof sealed dispensing container 9). A homogeneous foodstuff solution is achieved.

In Step D homogeneous foodstuff solution is fed through a granulation device, in order to achieve droplets. The droplets pass through an approximately 60-90 mm long air gap, where they are treated by sterile gas, in particular by CO₂, and arrive at the hot upper layer of the forming fluid, in particular vegetable oil.

In Step E the droplets immerse into forming fluid, in particular into vegetable oil for granulation, in order to achieve granules, for instance with about 2 - 3.5 mm diameter, wherein the forming fluid comprise layers of different temperature. The upper level, which can be approximately 5 - 7 cm thick, of the forming fluid is pre-heated to and kept during the process at about 40-45°C. Formed from the hot layer of formed fluid, the granules sink and pass through cooler layers of the forming fluid (the lowest levels of the forming fluid can have a temperature of about 10 - 20°C, in particular under or equal to 15°C). In the cooler levels of the forming fluid the granules acquire strength and, as described above, accumulate, for instance, at the bottom of the second container. Note that a flow-controlling-device can be connected to the set-up, in order to facilitate the flow of the granules and for better formation and cooling of the granules. Such flow-controlling-device can be designed to create a spiral-type of flow of the granules in the forming fluid.

Note that the sizes of the granules can controlled in Step D and/or E, by means of changing the feeding speed of the homogeneous foodstuff solution through the granulation device or by adjusting the temperature of the vegetable oil's upper layer.

In Step F the granules are separated from the forming fluid.

In Step G the granules are postprocessed, wherein the postprocessing of the granules comprises at least one of the following steps:
Step G1: washing granules with cold water, in order to remove the rest of the forming fluid. In this step the granules are washed, for instance on a sieve, with a stream of cold water, in order to remove the rest of the forming fluid from the surface of the granules. Additionally they can be kept on a sieve for about 20 - 30 minutes in order to remove the water from them;
Step G2: treating the granules, in particular in an about 0.5 - 1.0% solution of tannin for about 15 - 20 minutes. Treating with a tannin solution can also impart strength to the granules. For that one can prepare a for instance 1% solution of tannin by dissolving tannin in water at temperature of about 80 - 85°C and then cooling down the solution to about 15°C;
Step G3: washing the granules with water;
Step G4: treating the granules with an about 12 -13 % of cooking salt solution for about 25 - 50 minutes. It is useful to keep the weight ratio of salt solution : the granules at a ratio of approximately 1 : 1. In particular one can leave the granules on a sieve in the salt solution for about 50 minutes;
Step G5: removing the granules from the salt solution;
Step G6: drying and sorting the granules on a sieve, in particular an electromechanical sieve, in order to obtain dry granules, and
Step G7: adding a flavoring agent to the dry granules, in particular in an amount of about 10% by weight, and mixing well. For the preparation of the flavoring agent, natural preserves herring with filling can be milled and subjected to homogenization in order to obtain a fish homogenate (an emulsion of fish components). Water, salt and vegetable oil (preferably corn oil) can be added to the obtained fish homogenate for example in the following ratio: water 10 - 15 %, salt 15 - 20%, vegetable oil 10 - 15 %, so that the ratio of fish homogenate : water-salt-vegetable oil solution is about 1:1. Furthermore, the achieved mixture can be homogenized by stirring and centrifuged for about 15 - 20 minutes. The upper liquid layers of the mixture can be collected. Fish fat, liquid fish homogenate, salt and water can be dissolved in the liquid components. Vegetable oil (preferably corn oil) can added to the obtained mixture in an amount of 10 -15 mas%, and again centrifuged for 15 - 20 minutes. Moreover, it is advantageous to remove the precipitate from the flavoring agent. It is advantageous to keep the amount of the flavoring additives at less than 10% of the product's mass. The granules can be then mixed, packed in glass jars, for example with capacity of not more than 150 g, rolled and kept in cooled rooms, where the storage temperature does not exceed for example 7°C.

The qualitative characteristics of the finished product are summarized in Table 2. Food granulated caviar has medioprophylactic and dietary properties. The invention can be used in the food industry.

| Indicators | Characteristics |
|---|---|
| | |
| Appearance | spherical grains with a smooth surface |
| Sizes (diameter) Structure | 2 - 3.5 mm solid, not attached to each other grain |
| Color | from light to dark green (blacks) |
| Taste and odor | characteristic to fish natural caviar, without foreign taste and odor. |
| Modification limit | Can be stored at approximately 32°C for about 5 hour |
| Thermal stability | Thermo-resistance at 27 to -30 C |

In the final product the soy protein provides an increase of sulfur-containing amino acids (cysteine and methionine) and dominance of potassium ions over sodium ions, that promotes energy metabolism of cells and regulation of cardiovascular and urinary systems of the body.

The use of soy protein reduces the risk of food intolerance reactions in people with intolerance to dairy products due to the lack of the enzyme of lactate dehydrogenase. In addition, recent studies have shown that regular use of soy protein has a significant anticancer effect. Food gelling agent is a gelling agent of vegetable origin, which, in contrast to the animal (gelatin), is easily absorbed by organism. In a concrete case, apple pectin is used. The dye is a green powder, suitable for coloring foods and drinks, each component is for example recommended by FDA (Food and Drug Administration, USA).

## Claims

1. An apparatus for production of granules, in particular artificial granulated caviar, from an initial aqueous composition of foodstuff components comprising:
- at least one food cooker (1)
- at least one first container (9) and at least one second container (12) placed one above the other,
- a storage hopper (14),
- and an electromechanical calibration device,
wherein
- the food cooker (1) is configured to prepare and to heat up an initial foodstuff-solution from an initial aqueous composition of foodstuff and comprises:
* a water jacket (1a),
* a heating unit (2), and
* a built-in electric fast-speed mixer homogenizer (6), which built-in electric fast-speed mixer homogenizer (6) is configured to homogenize the initial foodstuff-solution, in order to achieve a homogenized foodstuff-solution,
- the first container (9) is configured to receive the homogenized foodstuff-solution and to maintain the homogenized foodstuff-solution's homogeneity, and
* is designed as a sealed, in particular gas-proof, dispensing, in particular rectangular, container (9),
* is arranged above the second container (12),
* is connected to a source of compressed sterile gas via a gas pressure reductor (7),
* comprises a temperature-control jacket (17a), and discharge tubes (23) having granulation devices (11),
- the second container (12) contains a forming fluid (22) and is configured to form and to accumulate the granules and has
* an inclined bottom (21), which is configured to forward the granules to the storage hopper (14),
* at least one hot water jacket (17b) and at least one cooling fluid jacket (13), which are configured to control a temperature gradient between the top and the bottom of the second container (12), and
* fluid-outlet pipes (32, 33, 34), which are configured to allow drain and circulation of the forming fluid (22),
- the storage hopper (14) has an inclined bottom and comprises at least one mesh bag (18), which at least one mesh bag (18) is configured to separate the finished granules from the forming fluid (22),
- the electromechanical calibration device has at least one sieve, the said sieve is arranged for final cleaning and calibration of the granules.

2. The apparatus according to Claim 1, **characterized in that** the second container (12) has at least two fluid-outlet pipes (32, 33), which are arranged at the different levels of the second container (12), wherein one fluid-outlet pipe (32) is configured to allow the drain of the forming fluid (22) and the other fluid-outlet pipe (33) is configured to allow the supply of chilled forming fluid and/or the drain of the forming fluid (22).

3. The apparatus according to Claim 1 or 2, **characterized in that** the at least one sieve is made of a metallic material.

4. The apparatus according to any of the Claims 1 to 3, **characterized in that** the heating unit is designed as a gas burner (2), the at least one food cooker (1) is designed as gas-fired food cooker comprising a gas storage container for storing natural gas.

5. The apparatus according to any of the Claims 1 to 4, **characterized in that** the discharge tubes (23) having granulation devices (11), in particular granulation devices (11) comprising needles (25), are heatable, in particular the discharge tubes (23) reach through the temperature-control jacket (17a), and comprise valve cocks (24).

6. The apparatus according to any of the Claims 1 to 5, **characterized in that** the apparatus comprises at least one, preferably two, outlet pipe (16), arranged under the granulation devices (11) and above the second container (12) and designed to direct the droplets from the middle to the sides of the second container (12).

7. The apparatus according to any of the Claims 1 to 6, **characterized in that** the sealed, in particular gas-proof, dispensing container (9) comprises a circulating centrifugal pump (10), which is configured to prevent stratification of the initial foodstuff-solution.

8. The apparatus according to any of the Claims 1 to 7, **characterized in that** the source of compressed gas contains sterile gas, in particular carbon dioxide.

9. The apparatus according to any of the Claims 1 to 8, **characterized in that** the second container (12) has a tap, which tap is associated to the inclined bottom (21) and is configured to forward the granules to the storage hopper (14).

10. The apparatus according to any of the Claims 1 to 9, **characterized in that** the at least one mesh bag (18) is replaceable during the production process.

11. The apparatus according to any of the Claims 1 to 10, **characterized in that** the storage hopper (14) is detachable and/or removable from the apparatus and in particular comprises wheels.

12. The apparatus according to an of the Claims 1 to 11, **characterized in that** the forming fluid (22) is a vegetable oil, in particular sunflower or corn oil.

## Patentansprüche

1. Einrichtung zum Herstellen von Granulatkörnern, insbesondere künstlichem granuliertem Kaviar, aus einer anfänglichen wässrigen Zusammensetzung von Lebensmittelkomponenten, umfassend:
- zumindest einen Lebensmittelkocher (1)
- zumindest einen ersten Behälter (9) und zumindest einen zweiten Behälter (12), die übereinander angeordnet sind,
- einen Vorratsbehälter (14), und
- eine elektromechanische Kalibriervorrichtung,
wobei
- der Lebensmittelkocher (1) dazu eingerichtet ist, eine anfängliche Lebensmittellösung aus einer anfänglichen wässrigen Lebensmittelzusammensetzung zu bereiten und zu erwärmen, und umfasst:
^{∗} einen Wassermantel (1a),
^{∗} eine Heizeinheit (2), und
^{∗} einen eingebauten elektrischen Schnellmischer-Homogenisierer (6), wobei der eingebaute elektrische Schnellmischer-Homogenisierer (6) zum Homogenisieren der anfänglichen Lebensmittellösung eingerichtet ist, um eine homogenisierte Lebensmittellösung zu erhalten,
- der erste Behälter (9) dazu eingerichtet ist, die homogenisierte Lebensmittellösung aufzunehmen und die Homogenität der homogenisierten Lebensmittellösung aufrechtzuerhalten, und
^{∗} als geschlossener, insbesondere gasdichter, insbesondere rechteckiger, Ausgabebehälter (9) ausgebildet ist,
^{∗} über dem zweiten Behälters (12) angeordnet ist,
^{∗} an eine Quelle für steriles Druckgas über einen Gasdruckminderer (7) angeschlossen ist,
^{∗} einen Temperiermantel (17a) und Entladerohre (23) mit Granuliervorrichtungen (11) aufweist,
- der zweite Behälter (12) ein Formierfluid (22) enthält und dazu eingerichtet ist, Granulatkörner zu formen und zu sammeln, mit
^{∗} einem geneigten Boden (21), der zum Weiterleiten der Granulatkörner zum Vorratsbehälter (14) eingerichtet ist,
^{∗} zumindest einen Heißwassermantel (17b) und zumindest einen Kühlfluidmantel (13), die zum Steuern eines Temperaturgradienten zwischen der Ober- und Bodenteil des zweiten Behälters (12) eingerichtet sind, und
^{∗} Fluid-Auslassrohre (32, 33, 34), die zum Ermöglichen des Abflusses und Zirkulierens des Formierfluids (22) eingerichtet sind,
- der Vorratsbehälter (14) einen geneigten Boden aufweist und zumindest einen Netzbeutel (18) umfasst, wobei der zumindest eine Netzbeutel (18) zum Trennen der fertigen Granulatkörner von dem Formierfluid (22) eingerichtet ist,
- die elektromechanische Kalibriervorrichtung zumindest ein Sieb aufweist, wobei das Sieb zur Endreinigung und Kalibrierung der Granulatkörner angeordnet ist.

2. Einrichtung nach Anspruch 1, **dadurch gekennzeichnet, dass** der zweite Behälter (12) zumindest zwei Fluid-Auslassrohre (32, 33) aufweist, die auf unterschiedlichen Ebenen des zweiten Behälters (12) angeordnet sind, wobei ein Fluid-Auslassrohr (32) zum Ermöglichen des Abflusses des Formierfluids (22) eingerichtet ist, und das andere Fluid-Auslassrohr (33) zum Ermöglichen der Zufuhr von gekühltem Formierfluid und/oder des Abflusses des Formierfluids (22) eingerichtet ist.

3. Einrichtung nach Anspruch 1 oder 2, **dadurch gekennzeichnet, dass** das zumindest eine Sieb aus metallischem Material besteht.

4. Einrichtung nach einem der Ansprüche 1 bis 3, **dadurch gekennzeichnet, dass** die Heizeinheit als Gasbrenner (2) gestaltet ist, der zumindest eine Lebensmittelkocher (1) als gasbeheizter Lebensmittelkocher mit einem Gasspeicherbehälter zur Speicherung von Erdgas gestaltet ist.

5. Einrichtung nach einem der Ansprüche 1 bis 4, **dadurch gekennzeichnet, dass** die Entladerohre (23) mit Granuliervorrichtungen (11), insbesondere Granuliervorrichtungen (11) mit Nadeln (25), beheizbar sind, insbesondere die Entladerohre (23) durch den Temperiermantel (17a) durchgreifen und Ventilhähne (24) aufweisen.

6. Einrichtung nach einem der Ansprüche 1 bis 5, **dadurch gekennzeichnet, dass** die Einrichtung zumindest ein, vorzugsweise zwei Auslassrohre (16) aufweist, angeordnet unter den Granuliervorrichtungen (11) und über dem zweiten Behälters (12) und dazu ausgelegt, die Tröpfchen von der Mitte zu den Seiten des zweiten Behälters (12) zu leiten.

7. Einrichtung nach einem der Ansprüche 1 bis 6, **dadurch gekennzeichnet, dass** der geschlossene, insbesondere gasdichte, Ausgabebehälter (9) eine umlaufende Kreiselpumpe (10) aufweist, die dazu eingerichtet ist, eine Schichtung der anfänglichen Lebensmittellösung zu verhindern.

8. Einrichtung nach einem der Ansprüche 1 bis 7, **dadurch gekennzeichnet, dass** die Quelle für Druckgas steriles Gas, insbesondere Kohlendioxid, enthält.

9. Einrichtung nach einem der Ansprüche 1 bis 8, **dadurch gekennzeichnet, dass** der zweite Behälter (12) einen dem geneigten Boden (21) zugeordneten Hahn aufweist, der zum Weiterleiten der Granulatkörner in den Vorratsbehälter (14) ausgebildet ist.

10. Einrichtung nach einem der Ansprüche 1 bis 9, **dadurch gekennzeichnet, dass** der zumindest eine Netzbeutel (18) während des Produktionsprozesses austauschbar ist.

11. Einrichtung nach einem der Ansprüche 1 bis 10, **dadurch gekennzeichnet, dass** der Vorratsbehälter (14) von der Vorrichtung lösbar und/oder abnehmbar ist und insbesondere Räder aufweist.

12. Einrichtung nach einem der Ansprüche 1 bis 11, **dadurch gekennzeichnet, dass** das Formierfluid (22) ein Pflanzenöl, insbesondere Sonnenblumen- oder Maisöl, ist.

## Revendications

1. Appareil pour la production de granulés, en particulier de caviar artificiel granulé, à partir d'une composition aqueuse initiale de composants alimentaires, comprenant :
- au moins un cuiseur d'aliments (1)
- au moins un premier récipient (9) et au moins un deuxième récipient (12) arrangés l'un au-dessus de l'autre,
- une trémie de stockage (14), et
- un dispositif de calibrage électromécanique,
entendu que
- le cuiseur d'aliments (1) est configuré pour préparer et chauffer une solution initiale d'aliments à partir d'une composition aqueuse initiale d'aliments et comprend :
^{∗} une chemise d'eau (la),
^{∗} une unité de chauffage (2), et
^{∗} un mélangeur-homogénéisateur électrique à vitesse rapide intégré (6), lequel mélangeur-homogénéisateur électrique à vitesse rapide intégré (6) est configuré pour homogénéiser la solution initiale de produit alimentaire, afin d'obtenir une solution de produit alimentaire homogénéisée,
- le premier récipient (9) est configuré pour recevoir la solution de produit alimentaire homogénéisée et pour maintenir l'homogénéité de la solution de produit alimentaire homogénéisée, et
^{∗} est conçu comme récipient de distribution (9) étanche, en particulier étanche aux gaz, en particulier rectangulaire,
^{∗} est disposé au-dessus du deuxième récipient (12),
^{∗} est relié à une source de gaz stérile comprimé par l'intermédiaire d'un réducteur de pression de gaz (7),
^{∗} comprend une enveloppe de contrôle de la température (17a) et des tubes de décharge (23) comportant des dispositifs de granulation (11),
- le deuxième récipient (12) contient un fluide de formage (22) et est configuré pour former et accumuler les granulés et présente
^{∗} un fond incliné (21), qui est configuré pour acheminer les granulés vers la trémie de stockage (14),
^{∗} au moins une chemise d'eau chaude (17b) et au moins une chemise de fluide de refroidissement (13), qui sont configurées pour contrôler un gradient de température entre le haut et le bas du deuxième conteneur (12), et
^{∗} des tuyaux de sortie de fluide (32, 33, 34), qui sont configurés pour permettre le drainage et la circulation du fluide de formage (22),
- la trémie de stockage (14) a un fond incliné et comprend au moins un sac à mailles (18), qui est configuré pour séparer les granules finis du fluide de formage (22),
- le dispositif de calibrage électromécanique comporte au moins un tamis, ledit tamis étant disposé pour le nettoyage final et le calibrage des granulés.

2. Appareil selon la revendication 1, **caractérisé en ce que** le deuxième conteneur (12) a au moins deux tuyaux de sortie de fluide (32, 33), qui sont disposés aux différents niveaux du deuxième conteneur (12), un tuyau de sortie de fluide (32) étant configuré pour permettre la vidange du fluide de formage (22) et l'autre tuyau de sortie de fluide (33) étant configuré pour permettre l'alimentation en fluide de formage refroidi et/ou la vidange du fluide de formage (22).

3. Appareil selon la revendication 1 ou 2, **caractérisé en ce que** le au moins un tamis est fait d'un matériau métallique.

4. Appareil selon l'une quelconque des revendications 1 à 3, **caractérisé en ce que** l'unité de chauffage est conçue comme brûleur à gaz (2), ledit au moins un cuiseur d'aliments (1) étant conçu comme cuiseur d'aliments alimenté au gaz comprenant un récipient de stockage de gaz pour stocker du gaz naturel.

5. Appareil selon l'une quelconque des revendications 1 à 4, **caractérisé en ce que** les tubes d'évacuation (23) ayant des dispositifs de granulation (11), en particulier des dispositifs de granulation (11) comprenant des aiguilles (25), sont chauffables, en particulier les tubes d'évacuation (23) traversent l'enveloppe de régulation de température (17a) et comportent des robinets de soupape (24).

6. Appareil selon l'une quelconque des revendications 1 à 5, **caractérisé en ce que** l'appareil comprend au moins un, de préférence deux, tuyaux de sortie (16), disposés sous les dispositifs de granulation (11) et au-dessus du second récipient (12) et conçus pour diriger les gouttelettes du milieu vers les côtés du second récipient (12).

7. Dispositif selon l'une quelconque des revendications 1 à 6, **caractérisé en ce que** le récipient de distribution (9) étanche, notamment étanche aux gaz, comprend une pompe centrifuge de circulation (10), qui est configurée pour éviter la stratification de la solution alimentaire initiale.

8. Appareil selon l'une quelconque des revendications 1 à 7, **caractérisé en ce que** la source de gaz comprimé contient un gaz stérile, notamment du dioxyde de carbone.

9. Appareil selon l'une quelconque des revendications 1 à 8, **caractérisé en ce que** le deuxième récipient (12) comporte un robinet, lequel robinet est associé au fond incliné (21) et est configuré pour acheminer les granulés vers la trémie de stockage (14).

10. Appareil selon l'une quelconque des revendications 1 à 9, **caractérisé en ce que** le au moins un sac à mailles (18) est remplaçable au cours du processus de production.

11. L'appareil selon l'une quelconque des revendications 1 à 10, **caractérisé en ce que** la trémie de stockage (14) est détachable et/ou amovible de l'appareil et en particulier comprend des roues.

12. L'appareil selon l'une quelconque des revendications 1 à 11, **caractérisé en ce que** le fluide de formage (22) est une huile végétale, en particulier une huile de tournesol ou de maïs.
